# EUROPEAN PATENT APPLICATION

(11) **EP 3 243 919 A1**
(43) Date of publication of application: **15.11.2017**
(21) Application number: 15876956.2
(22) Date of filing: 09.11.2015
(51) Int. Cl.: C22C 9/04, F16C 17/02, F16C 33/12

(54) **COPPER ALLOY FOR SLIDING BEARINGS, AND SLIDING BEARING**

(30) Priority: 07.01.2015 JP 2015001419
(71) Applicant: Taiho Kogyo Co., Ltd, Toyota-shi Aichi 471-8502 (JP)
(72) Inventor: MATSUMOTO, Shinji, Toyota-shi Aichi 471-8502 (JP); EBATA,Yuhei, Toyota-shi Aichi 4718502 (JP)
(74) Representative: KIPA AB
(86) International application number: PCT/JP2015/081472
(87) International publication number: WO 2016/111083

(57) **Abstract**

There are provided a copper alloy for a slide bearing and a slide bearing, which can prevent Mn-Si primary crystals from causing seizure. The copper alloy for a slide bearing and a slide bearing according to the present invention contain 25 wt% or more and 48 wt% or less of Zn, 1 wt% or more and 7 wt% or less of Mn, 0.5 wt% or more and 3 wt% or less of Si, and 1 wt% or more and 10 wt% or less of Bi, the balance consisting of inevitable impurities and Cu, wherein there exist, in a sliding surface on which a counter material slides, Bi particles having a circle equivalent diameter larger than the average circle equivalent diameter of Mn-Si primary crystals and Bi particles having a circle equivalent diameter smaller than the average circle equivalent diameter of the Mn-Si primary crystals.

## Description

### TECHNICAL FIELD

The present invention relates to a brass-based copper alloy for a slide bearing and a slide bearing.

### BACKGROUND ART

A bearing in which Mn-Si primary crystals are crystallized out on its sliding surface is known (see Patent Literature 1). In Patent Literature 1, particles of the Mn-Si primary crystals are dispersed so as to be elongated in the sliding direction of a counter shaft.

### CITATIONS LIST

Patent Literature 1: Japanese Patent No. 3718147

### SUMMARY OF INVENTION

### TECHNICAL PROBLEMS

However, with the progress of wear, the Mn-Si primary crystals are disrupted and fallen from the bearing, the fallen Mn-Si primary crystals disadvantageously scratch the sliding surface of the bearing. Further, there is the problem that the scratch formed on the sliding surface causes seizure.

The present invention has been made in light of the aforementioned problems, and an object thereof is to provide a copper alloy for a bearing and a slide bearing which can prevent seizure in Mn-Si primary crystals.

### SOLUTIONS TO PROBLEMS

In order to attain the aforementioned object, the copper alloy for a slide bearing and the slide bearing according to the present invention contain 25 wt% or more and 48 wt% or less of Zn, 1 wt% or more and 7 wt% or less of Mn, 0.5 wt% or more and 3 wt% or less of Si, and 1 wt% or more and 10 wt% or less of Bi, the balance consisting of inevitable impurities and Cu, and are characterized in that there exist, in a sliding surface on which a counter material slides, Bi particles having a circle equivalent diameter larger than the average circle equivalent diameter of Mn-Si primary crystals and Bi particles having a circle equivalent diameter smaller than the average circle equivalent diameter of the Mn-Si primary crystals.

In the thus-configured copper alloy for a slide bearing, Bi which has been supplied from the Bi particles covers the sliding surface, thereby making it possible to improve the seizure resistance. The Bi particles having a circle equivalent diameter smaller than the average circle equivalent diameter of the Mn-Si primary crystals are dispersed in the sliding surface, thereby making it possible to suppress regions where Bi is present sparsely in the sliding surface and to supply Bi uniformly in the sliding surface. Accordingly, the seizure resistance can be improved. Further, the Bi particles having a circle equivalent diameter larger than the average circle equivalent diameter of the Mn-Si primary crystals are dispersed in the sliding surface, so that, even when the disrupted Mn-Si primary crystals are once fallen from the sliding surface, the Mn-Si primary crystals can be embedded in Bi having a circle equivalent diameter larger than the average circle equivalent diameter of the Mn-Si primary crystals. Thus, it is possible to prevent the disrupted Mn-Si primary crystals from scratching the sliding surface and to prevent the Mn-Si primary crystals from causing seizure.

The incorporation of 25.0 wt% or more of Zn can enhance the strength of the Cu-Zn matrix and suppress sulfurization corrosion caused by the S component in a lubricant oil. In the region where the Mn-Si primary crystals are present sparsely, sulfurization corrosion due to the S component is easily caused by the frictional heat in the Mn-Si primary crystals. However, since the region where the Mn-Si primary crystals are present sparsely can be covered with Bi, the sulfurization corrosion due to the S component can be suppressed. It is noted that 35.0 wt% or more of Zn is incorporated so that the Mn-Si primary crystal particles can grow up to such a size as to obtain more excellent wear resistance. Also, the Zn content is suppressed to 48.0 wt% or less, thereby making it possible to prevent deposition of a large amount of the y phase in a Cu-Zn matrix and embrittlement of the Cu-Zn matrix.

The incorporation of 1.0 wt% or more of Mn and 0.5 wt% or more of Si can lead to deposition of the Mn-Si primary crystal particles in an amount enough to improve the wear resistance. On the other hand, the Mn content is suppressed to 7.0 wt% or less, and the Si content is suppressed to 3.0 wt% or less, thereby making it possible to prevent reduction in toughness due to excessive deposition of the Mn-Si primary crystals. It is noted that the copper alloy of the present invention can contain inevitable impurities.

The copper alloy of the present invention may be configured so that the standard deviation in circle equivalent diameter of the Bi particles in the sliding surface is greater than the standard deviation in circle equivalent diameter of the Mn-Si primary crystals. Thus, even when Bi particles having a small circle equivalent diameter are dispersed, Bi particles having a large circle equivalent diameter can be dispersed at the same time.

Further, the copper alloy of the present invention may be configured so that the number of the Bi particles having a circle equivalent diameter, in the sliding surface circle, that is smaller than the average circle equivalent diameter of the Mn-Si primary crystals, is 70% or more and 90% or less of the total number of the Bi particles. Thus, the number of the Bi particles having a circle equivalent diameter smaller than the average circle equivalent diameter of the Mn-Si primary crystals is controlled, thereby making it possible to attain both of the embeddability of the Mn-Si primary crystals due to the Bi particles having a large circle equivalent diameter and the uniformity in supply of Bi due to the Bi particles having a small circle equivalent diameter.

### BRIEF DESCRIPTION OF DRAWINGS

FIG. 1 is a perspective view of a radial bearing.
FIGs. 2A and 2B show photomicrographs of a sliding surface of the radial bearing.
FIG. 3A is a histogram of the circle equivalent diameter; FIG. 3B is a graph of the cumulative percentage; and FIG. 3C is a histogram of the degree of circularity.
FIG. 4A is an explanatory view about a seizure test; and FIG. 4B is a schematic view showing the cross section of the radial bearing.

### DESCRIPTION OF EMBODIMENTS

An embodiment of the present invention will now be described in the following order.
(1) Configuration of radial bearing
(2) Method for producing radial bearing
(3) Experimental results
(4) Other embodiments

### (1) Configuration of radial bearing

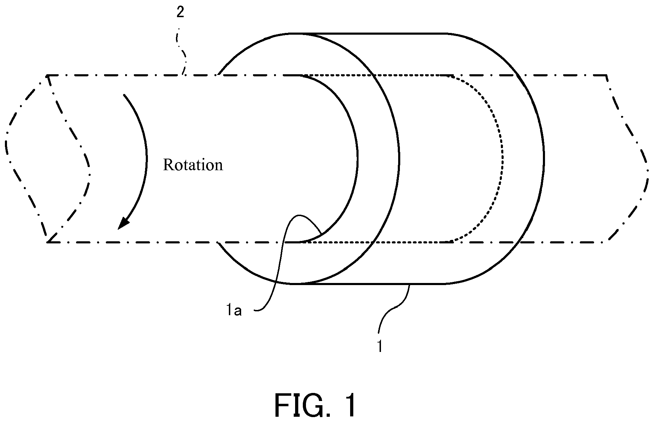

FIG. 1 is a perspective view of a radial bearing 1 (floating bush) as a slide bearing which is formed of a copper alloy for a slide bearing according to one embodiment of the present invention. The radial bearing 1 supports, in the radial direction, the load applied onto a counter shaft 2 (dashed-dotted line) which is provided with a turbine blade and a compressor blade on both ends in the axial direction, for example, in a turbo type supercharger for an internal combustion engine. The radial bearing 1 is formed cylindrically, and has an annular cross section orthogonal to the axial direction. By virtue of this, the radial bearing 1 can bear the counter shaft 2 on the inside. The radial bearing 1 according to this embodiment has an inner diameter of 7.5 mm and an outer diameter of 13.6 mm. An oil film of an engine oil as a lubricant oil is formed between the radial bearing 1 and the counter shaft 2. Upon rotation of the counter shaft 2, the counter shaft 2 slides on a sliding surface 1a which is an internal surface of the radial bearing 1. It is noted that, though not shown, a thrust bearing which supports the load applied onto the counter shaft 2 in the thrust direction may also be formed of the same copper alloy as that for the radial bearing 1. Further, the radial bearing 1 may be formed by combining two half-split bearing parts into a cylindrical shape.

Hereinafter, a copper alloy for a slide bearing which constitutes the radial bearing 1 will be described. The copper alloy for a slide bearing contains 40.0 wt% of Zn, 4.0 wt% of Mn, 1.3 wt% of Si and 3.4 wt% of Bi, the balance consisting of Cu and inevitable impurities. The inevitable impurities include Mg, Ni, Ti, B, Pb, Cr and the like, and are impurities mixed during refining or scrapping. The entire content of the inevitable impurities is 1.0 wt% or less. The masses of the respective elements in the copper alloy for a slide bearing were measured by using an ICP emission spectrophotometer (ICPS-8100 manufactured by Shimadzu Corporation).

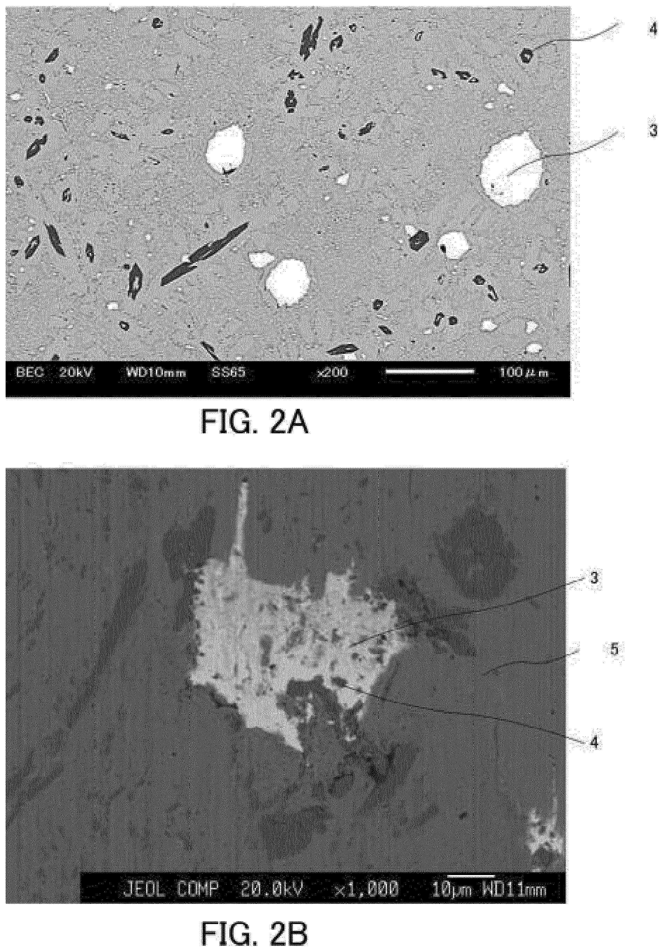

FIG. 2A is a photomicrograph of the sliding surface of the radial bearing 1. The photomicrograph of the sliding surface of the radial bearing 1 was taken at a magnification of 200 with an electron microscope (JSM6610A manufactured by JEOL Ltd.). As shown in FIG. 2, Mn-Si primary crystals 4 (black) and Bi particles 3 are dispersed in a Cu-Zn matrix 5 (gray) in the sliding surface of the radial bearing 1. The Mn-Si primary crystals 4 have a bar-shaped, circular or annular cross section, and the Bi particles 3 have an almost circular cross section.

The image of the photomicrograph of the sliding surface shown in FIG. 2A (hereinafter, analysis image) was input into an image analyzing device (LUZEX_AP manufactured by NIRECO) to measure the circle equivalent diameter (measurement parameter: HEYWOOD) for the images of the respective particles of the Mn-Si primary crystals 4 and Bi particles 3. When the arithmetic average value for the circle equivalent diameter of the images of the respective particles of the Mn-Si primary crystals 4 was calculated as the average circle equivalent diameter of the Mn-Si primary crystals 4 in the sliding surface, the value was 4.3 µm. Similarly, when the arithmetic average value for the circle equivalent diameter of the images of the Bi particles 3 was calculated as the average circle equivalent diameter of the Bi particles 3 in the sliding surface, the value was 5.4 µm. The Bi particles 3 include those having a circle equivalent diameter larger than the average circle equivalent diameter of the Mn-Si primary crystals 4 (large Bi particles) and those having a circle equivalent diameter smaller than the average circle equivalent diameter of the Mn-Si primary crystals 4 (small Bi particles). Among the images of the Bi particles 3, when the arithmetic average value for the circle equivalent diameter of the images of the Bi particles 3 having a circle equivalent diameter less than the average circle equivalent diameter of the Mn-Si primary crystals 4 was calculated as the average circle equivalent diameter of the small Bi particles, the value was 2.4 µm. Among the images of the Bi particles 3, when the arithmetic average value for the circle equivalent diameter of the images of the Bi particles 3 having a circle equivalent diameter not less than the average circle equivalent diameter of the Mn-Si primary crystals 4 was calculated as the average circle equivalent diameter of the large Bi particles, the value was 11.9 µm.

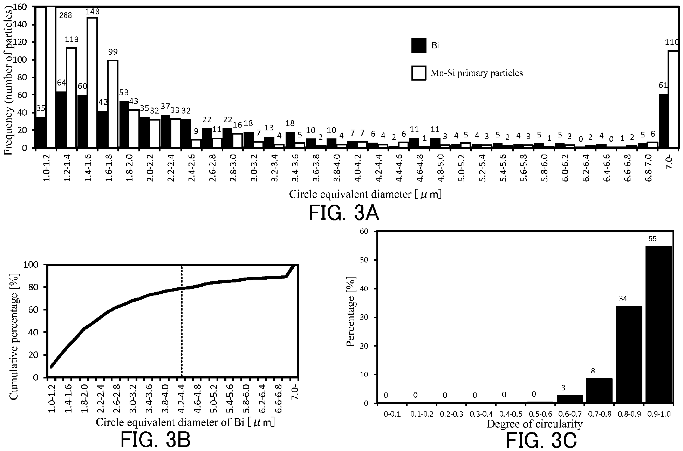

FIG. 3A is a histogram of the circle equivalent diameters of the Mn-Si primary crystals 4 and Bi particles 3 in the sliding surface. The horizontal axis in this figure indicates the rank of the circle equivalent diameter (in increments of 0.2 µm), and the vertical axis indicates the frequencies (the numbers of the Bi particles 3/Mn-Si primary crystals 4 in the sliding surface of 2.7×10⁵ µm²) at the respective ranks. As shown in FIG. 3A, the distribution of the circle equivalent diameter of the Mn-Si primary crystals 4 is deviated more than the distribution of the circle equivalent diameter of the Bi particles 3. The standard deviation in circle equivalent diameter of the Mn-Si primary crystals 4 is 4.1 µm, whereas the standard deviation in circle equivalent diameter of the Bi particles 3 is 8.5 µm. The circle equivalent diameter of the Bi particles 3 is distributed more broadly than that of the Mn-Si primary crystals 4. The number of the Mn-Si primary crystals 4 is larger than that of the Bi particles 3 within the range of the circle equivalent diameter of 1.8 µm or less, and the number of the Mn-Si primary crystals 4 is larger than that of the Bi particles 3 within the range of the circle equivalent diameter of less than 1.8 µm. However, the number of the Bi particles 3 is generally larger than that of the Mn-Si primary crystals 4 within the range of 1.8 µm or more.

FIG. 3B is a graph showing the cumulative percentage of an accumulated number proportion of the Bi particles 3 in the sliding surface for each circle equivalent diameter. The horizontal axis in FIG. 3B indicates the rank of the circle equivalent diameter (in increments of 0.2 µm), and the vertical axis indicates the cumulative percentage. The cumulative percentage is a percentage of accumulation of values obtained by dividing the numbers of the Bi particles 3 which belong to the respective ranks of the circle equivalent diameter by the total number of the Bi particles 3 in the ascending order of the circle equivalent diameter. As shown in FIG. 3B, the cumulative percentage at the average circle equivalent diameter (4.3 µm (broken line)) of the Mn-Si primary crystals 4 is 78.6%, which means that 78.6% of the total number of the Bi particles 3 have a circle equivalent diameter smaller than the average circle equivalent diameter of the Mn-Si primary crystals 4.

Further, the degree of circularity was measured for the respective images of the Bi particles 3 by means of the aforementioned image analyzing device. Among all the images of the Bi particles 3, the number proportion of the Bi particles 3 having a degree of circularity of 0.7 or more was 97%. The degree of circularity is a value obtained by dividing the length of the circumference of the circle having an area which is equal to that of the the image of the Bi particle 3 (=circle equivalent diameter × π) by the length of the contour of the the image of the Bi particle 3. The degree of circularity is 1 when the image of the Bi particle 3 is circular, and decreases as the shape of the image of the Bi particle 3 deviates from the circular shape.

FIG. 3C is a histogram of the degree of circularity of the Bi particles 3 in the sliding surface. The horizontal axis in this figure indicates the rank of the degree of circularity (in increments of 0.1), and the vertical axis indicates the percentage obtained by dividing the frequencies (the numbers of the Bi particles 3) at the respective ranks by the total number of the Bi particles 3. As shown in FIG. 3B, it has been found that the number of the Bi particles 3 having a degree of circularity of less than 0.5 is quite small, and that the inclination of increase in number of the Bi particles 3 becomes greater as the degree of circularity increases within the range of 0.5 or more.

### (1-2) Evaluation of seizure resistance:

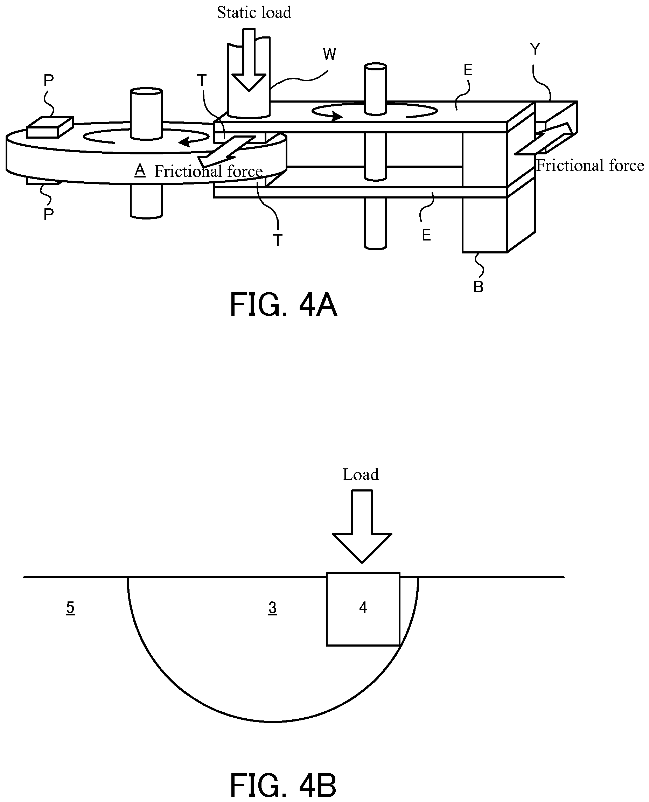

In order to evaluate the seizure resistance of the copper alloy for a slide bearing constituting the radial bearing 1, a seizure test was conducted. FIG. 4A is a schematic view explaining a pin-on-disk tester used in the seizure test. The seizure test was conducted by arranging a pair of test pieces T so that the rotating disk-shaped counter material A was sandwiched therebetween in the thickness direction, and applying static load between the test pieces T by a hydraulic cylinder W. The rotation speed of the counter material A was controlled so that the relative speed of the counter material A with respect to the test pieces T at a contact part between them was 15 m/sec. Also, an oil was supplied to the contact part between the counter material A and the test pieces T by bringing an oil supply pad P for retaining a lubricant oil (SAE30 CD-grade) in contact with the counter material A. The counter material A was formed of SCM415 subjected to hardening. The pair of test pieces T were attached to tip ends of beam parts E rotatably held in a plane parallel with the counter material A, and a load cell Y was arranged so as to prevent the horizontal rotation of the beam parts E. At the end parts of the beam parts E where the test pieces T were not be provided, balance weights B were attached to cancel the moment in a perpendicular direction which was generated at the beam parts E by the hydraulic cylinder W.

Frictional force is generated between the counter material A and the test pieces T, and the beam parts E rotate horizontally by the frictional force. Therefore, frictional force which horizontally rotates the beam parts E is applied to the load cell Y, and the magnitude of the load measured by the load cell Y means the magnitude of the frictional force between the test pieces T and the counter material A. Therefore, when the load applied to the load cell Y had arrived at a predetermined threshold value or more, it was determined that the frictional force between the test pieces T and the counter material A was abnormally large so that seizure occurred.

The magnitude of the static load applied between the test pieces T by the hydraulic cylinder W was gradually increased (2 MPa/5 min.) to measure the seizure load as the static load when seizure occurred between the test pieces T and the counter material A. Further, the seizure surface pressure was measured by dividing the seizure load by the contact area between the test pieces T and the counter material A.

When measured in the above manner, the seizure surface pressure of the copper alloy for a slide bearing constituting the radial bearing 1 of this embodiment was 26 MPa, which is a favorable result. It is meant that the greater the seizure surface pressure is, the higher the seizure resistance is.

FIG. 2B shows a photomicrograph of the sliding surface after the counter shaft 2 has been slid. As shown in this figure, the disrupted Mn-Si primary crystals 4 are embedded in the Bi particles 3. The Bi particles 3, which originally had an almost circular shape as shown in FIG. 2A, becomes in a partially elongated shape upon sliding of the counter shaft 2 as shown in FIG. 2B. Bi is elongated on the sliding surface in this manner, thereby making it possible to supply Bi broadly on the sliding surface. In this embodiment, the Bi particles 3 having a circle equivalent diameter smaller than the average circle equivalent diameter of the Mn-Si primary crystals 4 are dispersed in the sliding surface, thereby suppressing the regions where Bi is present sparsely in the sliding surface and making it possible to supply Bi uniformly in the sliding surface. Therefore, the seizure resistance can be improved. Further, the Bi particles 3 having a circle equivalent diameter larger than the average circle equivalent diameter of the Mn-Si primary crystals 4 are dispersed in the sliding surface, so that, even when the disrupted Mn-Si primary crystals 4 are once fallen from the sliding surface, the Mn-Si primary crystals 4 can be embedded in the Bi particles 3 having a circle equivalent diameter larger than the average circle equivalent diameter of the Mn-Si primary crystals 4. Accordingly, it is possible to prevent the disrupted Mn-Si primary crystals 4 from scratching the sliding surface and to prevent the Mn-Si primary crystals 4 from causing seizure.

Also, the standard deviation in circle equivalent diameter of the Bi particles 3 is greater than the standard deviation in circle equivalent diameter of the Mn-Si primary crystals 4, and the Bi particles 3 are distributed on a larger circle equivalent diameter side more broadly than the Mn-Si primary crystals 4. So, the possibility that the Mn-Si primary crystals 4 can be embedded can be enhanced. Further, the present invention is configured so that 78.6% of the total number of the Bi particles 3 have a circle equivalent diameter smaller than the average circle equivalent diameter of the Mn-Si primary crystals 4, thereby making it possible to attain both of the embeddability of the Mn-Si primary crystals due to the Bi particles having a large circle equivalent diameter and the uniformity in supply of Bi due to the Bi particles having a small circle equivalent diameter.

Further, since the number proportion of the Bi particles 3 having a large degree of circularity is high, the disrupted Mn-Si primary crystals 4 can be surely embedded. FIG. 4B is a schematic view showing the vertical cross section of the sliding surface. As shown in FIG. 4B, since the Bi particles 3 have a large degree of circularity, the outer edge of the Bi particles 3 constitutes a smooth curved surface, and the disrupted Mn-Si primary crystals 4 slide and move along the curved surface, thereby making it possible to smoothly guide the disrupted Mn-Si primary crystals 4 to a deep portion in the Bi particles 3. Accordingly, it is possible to prevent the disrupted Mn-Si primary crystals 4 from scratching the sliding surface and to prevent the Mn-Si primary crystals 4 from causing seizure.

### (2) Method for producing radial bearing

In the present embodiment, the radial bearing 1 is produced by carrying out the following steps: (a) melting, (b) continuous casting, (c) cutting and (d) mechanical processing in turn. Hereinafter, the respective steps will be explained.

### a. Melting

Firstly, raw materials were weighed and provided so as to enable the formation of a copper alloy for a slide bearing containing 40.0 wt% of Zn, 4.0 wt% of Mn, 1.3 wt% of Si and 3.4 wt% of Bi, the balance consisting of Cu and inevitable impurities. In the present embodiment, a Cu ingot, a Zn ingot, a Cu-Mn ingot and a Cu-Si ingot, respectively, were weighed and provided. The raw materials should be provided in masses according to the target mechanical properties of the radial bearing 1. The target mechanical properties of the radial bearing 1 are determined, for example, according to the mechanical properties of the counter shaft 2. Next, the provided raw materials are heated up to 1200°C by a high-frequency induction furnace. Thus, the respective ingots melt. Thereafter, bubbles of Ar gas are dispersed and jetted to remove hydrogen gas and inclusions.

### b. Continuous casting

Next, the molten materials for the copper alloy for a slide bearing were injected into a mold, and the copper alloy for a slide bearing is continuously pulled out through an opening of the mold in the casting direction and cooled, as it is, to room temperature, thereby forming a continuously cast bar of the copper alloy for a slide bearing. For example, casting is carried out at 1060°C by means of a mold formed of carbon, and the copper alloy for a slide bearing is pulled out at a pulling-out speed of 90 mm/min, thereby forming a continuously cast bar. It is considered that, in the solidification process in continuous casting from the molten state, the Mn-Si primary crystals 4 are crystallized out first; that the Cu-Zn matrix 5 is crystallized out next; and that a eutectic of Mn-Si and Cu-Zn is solidified at the end. It is noted that the diameter of the continuously cast bar of the copper alloy for a slide bearing is made larger by the machining quantity in the mechanical processing than the outer diameter of the radial bearing 1.

### c. Cutting

Then, the continuously cast bar of the copper alloy for a slide bearing is cut for each thickness of the radial bearing 1 (thickness in the length direction of the counter shaft 2).

### d. Mechanical processing

Finally, the continuously cast bar of the copper alloy for a slide bearing after cutting is subjected to machine work or press work, thereby completing the radial bearing 1. Here, machine work is carried out so as to form a through hole having an inner diameter which is larger by a predetermined quantity than the outer diameter of the counter shaft 2 and so that the outer diameter size of the radial bearing 1 coincides with a designed value.

### (3) Experimental results:

Table 1 indicates the experimental results of Examples 1 to 3. It is noted that Example 1 is identical with the first embodiment. Examples 1 to 3 were produced by a production method almost similar to that of First Embodiment. However, in Example 3, the average circle equivalent diameters of the Mn-Si primary crystals 4 and Bi particles 3 were made smaller than those of Examples 1 and 2 by increasing the pulling-out speed (solidification speed) as compared with those in Examples 1 and 2. It is noted that the average circle equivalent diameters of the Mn-Si primary crystals 4 and Bi particles 3 can be made smaller as the solidification speed is higher, but that the solidification speed can also be made higher by increasing the flow rate of cooling water for a mold in continuous casting.

**[Table 1]**

| Example | Number proportion of Bi particles having a degree of circularity of 0.7 to 1.0 | Average circle equivalent diameter [µm] (value in [ ] is standard deviation) | | | | Seizure surface pressure [MPa] |
|---|---|---|---|---|---|---|
| | | Mn-Si primary particles | Total Bi particles | Large Bi particles | Small Bi particles | |
| 1 | 0.97 | 4.3 [4.1] | 5.4 [8.5] | 11.9 | 2.4 | 26 |
| 2 | 0.93 | 3.3 [3.8] | 4.2 [7.7] | 11.0 | 2.0 | 24 |
| 3 | 0.85 | 2.4 [3.5] | 4.1 [7.4] | 8.1 | 1.5 | 22 |

As indicated in Table 1, in all of Examples 1 to 3, there exist, in the sliding surface, the Bi particles 3 having a circle equivalent diameter larger than the average circle equivalent diameter of Mn-Si primary crystals 4 and the Bi particles 3 having a circle equivalent diameter smaller than the average circle equivalent diameter of the Mn-Si primary crystals 4. Therefore, the disrupted Mn-Si primary crystals 4 could be embedded in the Bi particles 3 having a large degree of circularity, and good seizure surface pressure could be obtained also in the sliding surface in all of Examples 1 to 3. Also, it has been found that, as the number proportion of the Bi particles 3 having a large degree of circularity is higher, good seizure surface pressure can be obtained and the disrupted Mn-Si primary crystals 4 can be embedded efficiently, as indicated in Table 1. The average circle equivalent diameter of the Bi particles 3 (large Bi particles + small Bi particles) is increased, and, at the same time, the number proportion of the Bi particles 3 having a large degree of circularity is increased, thereby making it possible to synergistically improve the embeddability of foreign matter such as the Mn-Si primary crystals 4 in the Bi particles 3 and to drastically improve the seizure surface pressure.

### (4) Other embodiments

The above embodiment has illustrated an example of the radial bearing 1 formed of the copper alloy of the present invention, but other sliding members may be formed of the copper alloy of the present invention. For example, gear bushes for transmission, piston pin bushes and boss bushes may be formed of the copper alloy of the present invention. Also, the copper alloy for a slide bearing of the present invention may be produced by any other production method than continuous casting.

### REFERENCE SIGNS LIST

- 1: Radial bearing
- 2: Counter shaft
- 3: Bi particle
- 4: Mn-Si primary crystal
- 5: Cu-Zn matrix

## Claims

1. A copper alloy for a slide bearing containing:
25 wt% or more and 48 wt% or less of Zn,
1 wt% or more and 7 wt% or less of Mn,
0.5 wt% or more and 3 wt% or less of Si, and
1 wt% or more and 10 wt% or less of Bi,
the balance consisting of inevitable impurities and Cu,
wherein there exist, in a sliding surface on which a counter material slides, Bi particles having a circle equivalent diameter larger than the average circle equivalent diameter of Mn-Si primary crystals and Bi particles having a circle equivalent diameter smaller than the average circle equivalent diameter of the Mn-Si primary crystals.

2. The copper alloy for a slide bearing according to claim 1, wherein the standard deviation in circle equivalent diameter of the Bi particles in the sliding surface is larger than the standard deviation in circle equivalent diameter of the Mn-Si primary crystals in the sliding surface.

3. The copper alloy for a slide bearing according to claim 1 or 2, wherein the number of the Bi particles having a circle equivalent diameter, in the sliding surface circle, that is smaller than the average circle equivalent diameter of the Mn-Si primary crystals is 70% or more and 90% or less of the total number of the Bi particles.

4. A slide bearing containing:
25 wt% or more and 48 wt% or less of Zn,
1 wt% or more and 7 wt% or less of Mn,
0.5 wt% or more and 3 wt% or less of Si, and
1 wt% or more and 10 wt% or less of Bi,
the balance consisting of inevitable impurities and Cu,
wherein there exist, in a sliding surface on which a counter material slides, Bi particles having a circle equivalent diameter larger than the average circle equivalent diameter of Mn-Si primary crystals and Bi particles having a circle equivalent diameter smaller than the average circle equivalent diameter of the Mn-Si primary crystals.
